# EUROPÄISCHE PATENTSCHRIFT

(11) **EP 1 484 267 B1**
(45) Veröffentlichungstag und Bekanntmachung des Hinweises auf die Patenterteilung: **26.07.2006**
(21) Anmeldenummer: 04006936.1
(22) Anmeldetag: 23.03.2004
(51) Int. Cl.: B65G 17/00, B65G 35/06

(54) **Staufördersystem mit Transportwagen**
Accumulating conveyor with carrier
Transporteur d'accumulation avec chariot

(30) Priorität: 04.06.2003 DE 10325325
(43) Veröffentlichungstag der Anmeldung: 08.12.2004
(73) Patentinhaber: SIEMENS AKTIENGESELLSCHAFT, 80333 München (DE)
(72) Erfinder: Bacic, Mato, E-28220 Majadahonda (Madrid) (ES)

(56) Entgegenhaltungen:
- EP-A- 0 203 898
- DE-A1- 4 140 206
- DE-A1- 10 147 026
- DE-C- 554 623
- GB-A- 2 270 296
- US-A- 6 135 266

## Beschreibung

Die Erfindung betrifft ein Staufördersystem mit mindestens einem kurvengängigen, niedrig bauenden Stauförderer, und mindestens einem Transportwagen gemäß dem Gattungsbegriff des Patentanspruchs 1.

Aus der DE 101 47 026 A1 ist ein kurvengängiger, sehr niedrig bauender Montageförderer bekannt, der vorzugsweise für Werkstückträger-Einzellasten von bis zu 300 kg ausgelegt ist. Dieser Förderer ist beispielsweise auf dem Boden einer Fabrikationshalle verlegbar und kann in wesentlichen Teilen aus Aluminiumprofilen bei einer Bauhöhe von z.B. 100 mm zusammengesetzt und flexibel geänderten Anforderungen angepasst werden. Er ist als Stauförderer ausgebildet, der eine Mehrzahl von die Transportlast aufnehmenden, mit Lenkrollen oder -Rädern auf einer Fahrbahn abrollenden richtungsgeführten Transportwagen aufweist. Die Transportwagen sind dabei zu ihrem Antrieb reibschlüssig mit einem innerhalb der Fahrspur der Transportwagen verlaufenden angetriebenen, endlos umlaufenden Plattenbandförderer verbunden. Hierzu sind jeweils vorzugsweise zwei Mitnehmer am Fahrgestell eines solchen Transportwagens angeordnet, die sich unter einer einstellbaren Federkraft auf dem Plattenband des Plattenbandförderers abstützen und gleichzeitig durch Eingriff in eine Hohlprofilspur die Richtungsführung des Transportwagens bewirken. Die Führungsflächen der Hohlprofilspur, die mit den Mitnehmern zusammenwirken, liegen oberhalb des Plattenbandes, aber deutlich unterhalb der Ebene der Fahrbahn für die Transportwagen. Die Fahrbahn selbst besteht aus blechförmigen Flächenelementen, die jeweils im Bereich des Fördertrums des Plattenbandes eine Aussparung aufweisen, die gleichsam einen Führungskanal für die Mitnehmer der Transportwagen darstellt.

Bei diesem Montageförderer, der beispielsweise als Montagestrecke für den Bau von Verbrennungsmotoren eingesetzt wird, können herunterfallende Montageteile wie etwa Schrauben, Muttern, Unterlegscheiben und ähnliches zu Störungen führen, wenn diese in den Bereich des Plattenbandes gelangen. Diese Fremdkörper werden nämlich von dem Plattenband mitgenommen und können insbesondere im Bereich der Antriebsstation für das Plattenband oder an Umlenkstellen zu ernsthaften Störungen und Beschädigungen führen, wenn sie sich beispielsweise im Antriebsmechanismus verklemmen. Dabei kann es beispielsweise zu einem Reißen des kettenartig zusammengesetzten Plattenbandes kommen. Aus diesem Grunde ist der vorstehend beschriebene Montageförderer mit einer Schutzvorrichtung versehen. Diese besteht aus Bürstenleisten, die horizontal gegeneinander stehend an den Seiten des Führungskanals für die Mitnehmer befestigt sind und somit den Führungskanal, an dessen Boden der Fördertrum läuft, nach oben abschließen. Der Rücklauftrum des Plattenbandes verläuft weitestgehend unterhalb der Flächenelemente, die die Fahrbahn bilden und ist daher ohnehin geschützt. Die Bürstenleisten gestatten dabei problemlos das Passieren der Mitnehmer, fangen jedoch herabfallende Fremdkörper auf, so dass diese vom Montagepersonal wieder aufgenommen werden können.

Diese Art der Sicherungsabdeckung für den Fördertrum des Plattenbandes kann jedoch keine vollständige Sicherheit gegen das Eindringen von Fremdkörpern in den Mechanismus des Plattenbandes bieten. Es kann nämlich vorkommen, dass einzelne Teile völlig unbemerkt herabfallen, dann zwar zunächst auf den Bürstenleisten liegen bleiben, aber schließlich unbemerkt vom Montagepersonal mit den Füßen durch die Bürstenleiste hindurchgedrückt werden und auf das Plattenband fallen.

Aufgabe der Erfindung ist es, ein gattungsgemäßes Staufördersystem, das insbesondere als Montageförderer in der vorbeschriebenen Weise einsetzbar ist, so zu verbessern, dass unbeabsichtigt oder unbemerkt auf das Plattenband fallende Fremdkörper nicht mehr zu Störungen im Mechanismus des Fördersystems führen.

Gelöst wird diese Aufgabe bei einem gattungsgemäßen Staufördersystem durch die im kennzeichnenden Teil des Anspruchs 1 beschriebenen Merkmale. Vorteilhafte Weiterbildungen der erfindungsgemäßen Lösung ergeben sich aus den Unteransprüchen.

Ein wesentliches Merkmal der Erfindung ist darin zu sehen, dass das Plattenband im unmittelbaren Nahbereich der Unterseite der Flächenelemente der Fahrbahn angeordnet ist. Zwischen der Unterseite der Flächenelemente der Fahrbahn und der Oberseite des Plattenbandes liegt nicht wie beim gattungsgemäßen Stand der Technik ein Abstand in der Größenordnung von mehreren Zentimetern, sondern vorzugsweise allenfalls von einigen Millimetern. Daher kann die Oberseite des Plattenbandes entsprechend dicht bis praktisch unmittelbar an die Unterseite der Flächenelemente herangeführt werden, aber ohne an diesen zu schleifen, so dass herabfallende Fremdkörper in dem extrem flach ausgebildeten Führungskanal für die Mitnehmer liegen bleiben. Dieser Führungskanal ist vorteilhaft nach oben hin offen, also nicht durch Bürstenleisten abgedeckt, so dass herunterfallende Fremdkörper problemlos vom Montagepersonal aufgefunden und aufgenommen werden können. Ein weiteres erfindungswesentliches Merkmal besteht darin, dass die Führungsflächen für die Richtungsführung des Transportwagens durch die seitlichen Stirnflächen der Flächenelemente im für den Fördertrum ausgesparten Bereich gebildet sind. Das mit diesen Führungsflächen zusammenwirkende Seitenführungselement an den Mitnehmern, das vorzugsweise als Seitenführungsrad ausgebildet ist, ist daher gegenüber der vorbekannten Lösung deutlich weiter nach oben verlagert. Es hat sich herausgestellt, dass eine völlig sichere Richtungsführung der Transportwagen möglich ist, auch wenn die Führungsflächen in der Höhe lediglich der Dicke von dickwandigen Blechen oder Platten entsprechen, die als Flächenelemente für die Fahrbahn der Transportwagen zweckmäßigerweise eingesetzt werden. Die Tiefe des Führungskanals kann also beispielsweise auf einen Wert von etwa 5 mm ohne eine Gefährdung der Zuverlässigkeit der Richtungsführung beschränkt werden. Selbstverständlich wäre es auch möglich, wenn gleich dies mit einem baulichen Zusatzaufwand verbunden wäre, die Seitenwände des Führungskanals etwas zu vergrößern, indem beispielsweise ein entsprechendes Winkelblech mit einem vertikal nach unten weisenden Schenkel an die Ränder der Aussparung der Fahrbahn angesetzt würde.

Die Sicherheit gegen Störungen durch Fremdkörper lässt sich weiter dadurch verbessern, dass im Bereich des Fördertrums und/oder im Bereich des Rücklauftrums ein oder mehrere Abstreifer zur automatischen Entfernung von Fremdkörpern, die auf das Plattenband gefallen sind, vorgesehen werden. Diese Abstreifer können als einfache, schräg zur Förderrichtung angestellte Abweisbleche gestaltet sein und können entsprechende Fremdkörper in einen von außen möglichst leicht zugänglichen Hohlraum unterhalb der Flächenelemente der Fahrbahn fördern, so dass dieser Hohlraum gelegentlich problemlos entleert werden kann.

Die Transportwagen des Staufördersystems sind vorzugsweise mit jeweils vier Lenkrollen oder -Rädern sowie mit zwei Mitnehmern ausgestattet, von denen einer im vorderen und einer im hinteren Bereich des Fahrgestells angeordnet ist. Grundsätzlich möglich ist es aber auch, lediglich zwei Lenkrollen oder -räder im vorderen Teil des Transportwagens vorzusehen und im hinteren Teil zwei Räder mit nicht schwenkbarer Achse anzuordnen. In einem solchen Fall würde ein einziger Mitnehmer vorgesehen und im Bereich zwischen den beiden Lenkrollen angeordnet werden. Die Bauweise mit vier Lenkrollen und zwei Mitnehmern weist aber Vorteile hinsichtlich einer besonders guten Kurvengängigkeit auf.

Zweckmäßigerweise sind die Mitnehmer mit einer Einrichtung zur Einstellung der Reibschlusskraft ausgestattet. Dadurch lässt sich die erforderliche Kraft zum Anhalten eines Transportwagens bei weiterlaufendem Plattenband auf einen jeweils gewünschten Wert einstellen. Für die Sicherheit des Staufördersystems, insbesondere zur Vermeidung von Unfallgefahren im Falle einer gleichzeitigen Stauung einer Vielzahl von Transportwagen an einer Stelle empfiehlt es sich, die Transportwagen jeweils mit einer Einrichtung zur Aufhebung des Reibschlusses zwischen den Mitnehmern und dem Plattenband zu versehen, wobei diese Einrichtung durch Auffahren des Transportwagens auf einen anderen bereits stehenden Transportwagen oder ein anderes Hindernis betätigbar ist.

In manchen Fällen ist es notwendig, ein Staufördersystem aus verschiedenen Förderkreisen zu bilden, die einzelnen Förderkreise also miteinander zu verbinden. Dies kann notwendig werden, um der Forderung nach unterschiedlichen Fördergeschwindigkeiten in einer Montagelinie, die beispielsweise aus Hand- und Automatikplätzen gebildet ist, oder Forderungen nach einem Wechsel der Transportrichtung entsprechen zu können. Hierzu sieht die Erfindung den Einsatz von mindestens zwei unabhängigen Stauförderern vor, deren Fördertrume jeweils paarweise durch eine Weiche fördertechnisch miteinander verbindbar sind. Hierzu weisen die Flächenelemente der Fahrbahn im Bereich der Weiche jeweils zweckmäßigerweise eine Aussparung auf, innerhalb deren eine vorzugsweise motorisch antreibbare Weichenzunge mit einer vertikalen Schwenkachse angeordnet ist. Diese Weichenzunge ist als im wesentlichen plattenförmiger Körper mit einer den Flächenelementen der Fahrbahn entsprechenden Dicke ausgebildet und ist wahlweise in den Bereich des Fördertrums des einen Stauförderers hinein verschwenkbar. Bei betätigter Weiche stellt die Weichenzunge ein Hindernis im Sinne eines Abweisers für die Mitnehmer auf dem Fördertrum dar und lenkt diese Mitnehmer jeweils auf den Fördertrum des anderen Stauförderers um. Dabei empfiehlt es sich, beim Einschwenken der Weichenzunge in den Bereich des Fördertrums des einen Stauförderers die seitliche Stirnfläche der Flächenelemente der Fahrbahn im Bereich dieses Fördertrums als mechanischen Anschlag zu nutzen. Die Anschlagsfläche ist dabei diejenige seitliche Stirnfläche, die der Weichenzunge in der Schwenkrichtung gegenüberliegt. Dadurch kann auf entsprechende separate Anschlagmittel für die Begrenzung der Schwenkbewegung der Weichenzunge verzichtet werden.

Ein großer Vorteil der vorliegenden Erfindung, die ein besonders hohes Maß an Sicherheit vor Störungen durch unbeabsichtigt in den Bereich des Plattenbandes und der damit zusammenhängenden Mechanik gelangenden Fremdkörper bietet, besteht darin, dass der Bauaufwand gegenüber dem nächstliegenden Stand der Technik nicht nur nicht erhöht, sondern sogar gesenkt wird. So entfällt insbesondere der Aufwand für die Bürstenleisten und deren Anbringung. Ein weiterer wesentlicher Vorteil ist darin zu sehen, dass die Bauhöhe der Förderstrecke gegenüber der bisherigen Lösung, die ebenfalls bereits gering war, nochmals deutlich abgesenkt werden konnte. Die Reduzierung der Bauhöhe beläuft sich auf etwa ein Drittel der bisherigen Höhe. Die Trasse des Plattenbandförderers kann daher relativ problemlos durch Personen und auch Förderzeuge (z.B. Gabelstabler) überquert werden.

Nachfolgend wird die vorliegende Erfindung anhand eines in den Figuren dargestellten Ausführungsbeispiels näher erläutert. Es zeigen:
- Fig. 1: eine Draufsicht auf ein erfindungsgemäßes Staufördersystem,
- Fig. 2: einen Ausschnitt aus einem Schnitt durch einen Montageförderer nach dem Stand der Technik im Bereich des Mitnehmers,
- Fig. 3: einen Schnitt durch einen erfindungsgemäßen Stauförderer im Bereich des Mitnehmers,
- Fig. 4: die Einzelheit B aus Fig. 3 in vergrößerter Form,
- Fig. 5: einen Schnitt im Bereich eines Abstreifers,
- Fig. 6: eine Draufsicht auf einen Transportwagen,

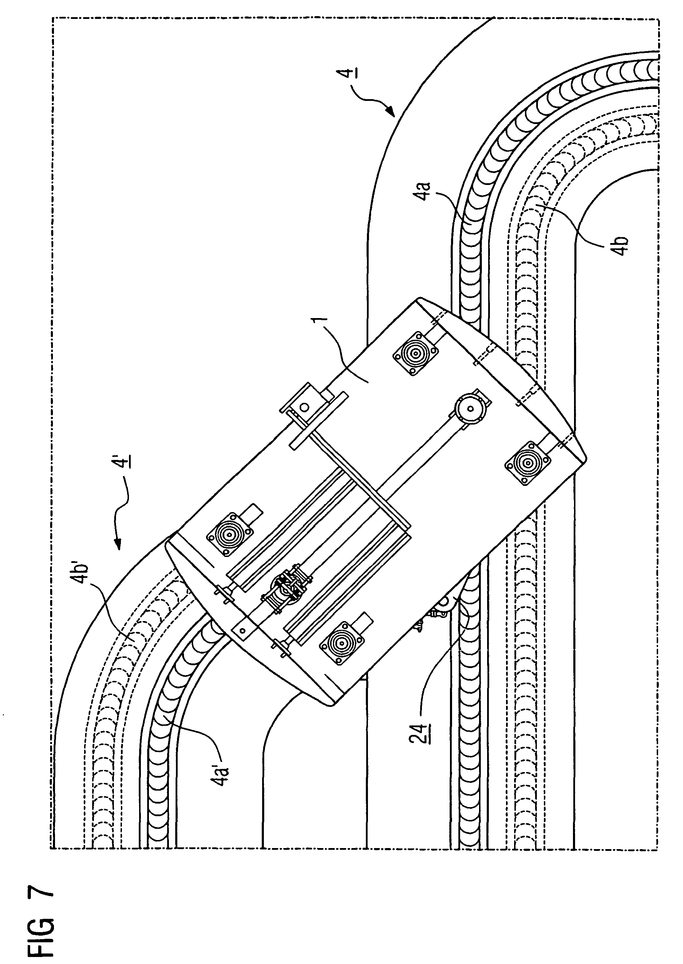

- Fig. 7: eine Draufsicht im Bereich einer Weiche,
- Fig. 8: die Weiche gemäß Fig. 7 in vergrößerter Form und
- Fig. 9: die Weiche gemäß Fig. 7 als Schnittbild.

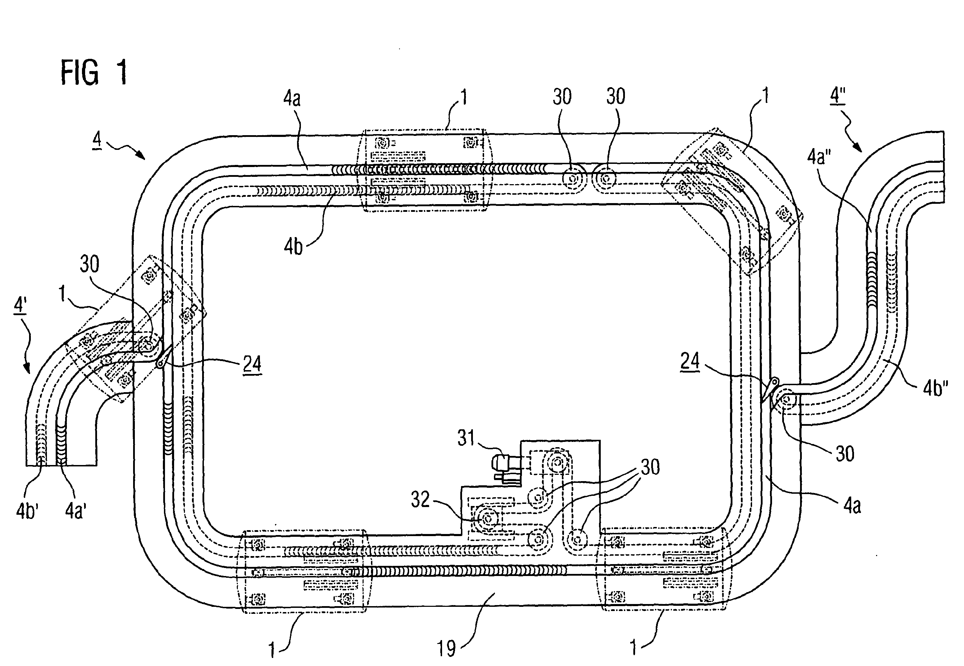

In Fig. 1 ist ein erfindungsgemäßes Staufördersystem dargestellt, welches drei unabhängig angetriebene Stauförderer 4, 4', 4" beinhaltet. Der Stauförderer 4 ist hierbei so gestaltet, dass er für mehrere Transportwagen 1 jeweils einen in sich geschlossenen und im wesentlichen rechteckigen Umlauf ermöglicht. In der Mitte der Fahrbahn 19 verläuft ein Fördertrum 4a eines Plattenbandes, dessen Rücklauftrum mit 4b bezeichnet ist und auf der Innenseite des rechteckigen Umlaufs angeordnet ist. Der Fördertrum 4a liefert, wie weiter unten noch näher ausgeführt wird, die Antriebskraft für die Bewegung der Transportwagen 1, die über Mitnehmer reibschlüssig mit dem Fördertrum 4a verbunden sind. Im oberen Teil des rechteckförmigen Umlaufs des Stauförderers 4 sind zwei Kettenräder 30 nahe benachbart zueinander angeordnet. Sie lenken jeweils den Fördertrum 4a in den Rücklauftrum 4b um, die im übrigen parallel zueinander verlaufen. Zum Antrieb des Stauförderers 4 sind eine Antriebsstation 31 sowie eine Spannstation 32 zur Gewährleistung einer ausreichenden Spannung des Plattenbandes in den Rücklauftrum 4b eingeschaltet. Sowohl an der linken als auch an der rechten Schmalseite des rechteckförmigen Umlaufs ist jeweils ein weiterer Stauförderer 4' bzw. 4 " angebaut. Beide Stauförderer 4', 4" sind im Grundsatz entsprechend dem Stauförderer 4 aufgebaut, also ebenfalls mit einem Plattenband versehen, das einen Fördertrum 4a' bzw. 4a" und einen Rücklauftrum 4b' bzw. 4b" aufweist. Der weitere Verlauf der beiden Förderer 4' und 4" ist in der Darstellung nicht enthalten. Man erkennt jedoch, dass beide Stauförderer 4', 4" mit einem Kettenrad 30 zur Umlenkung des Fördertrums 4a' bzw. 4a'' in den Rücklauftrum 4b' bzw. 4b" bis in die unmittelbare Nähe des Fördertrums 4a an den Stauförderer 4 heranreichen. Damit stoßen die Fördertrume 4a und 4a' bzw. 4a" praktisch unmittelbar aneinander, so dass an diesen Stellen, wie ebenfalls weiter unten näher erläutert wird, eine Weiche 24 gebildet werden kann, mittels derer der fördertechnische Übergang eines Transportwagens 1 vom Stauförderer 4 auf den Stauförderer 4' bzw. 4" wahlweise ermöglicht wird.

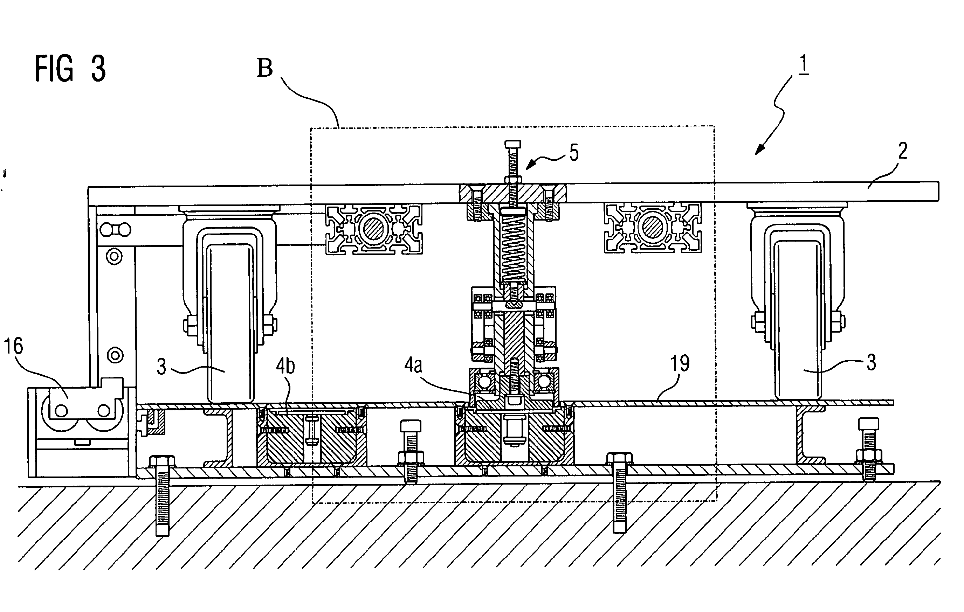

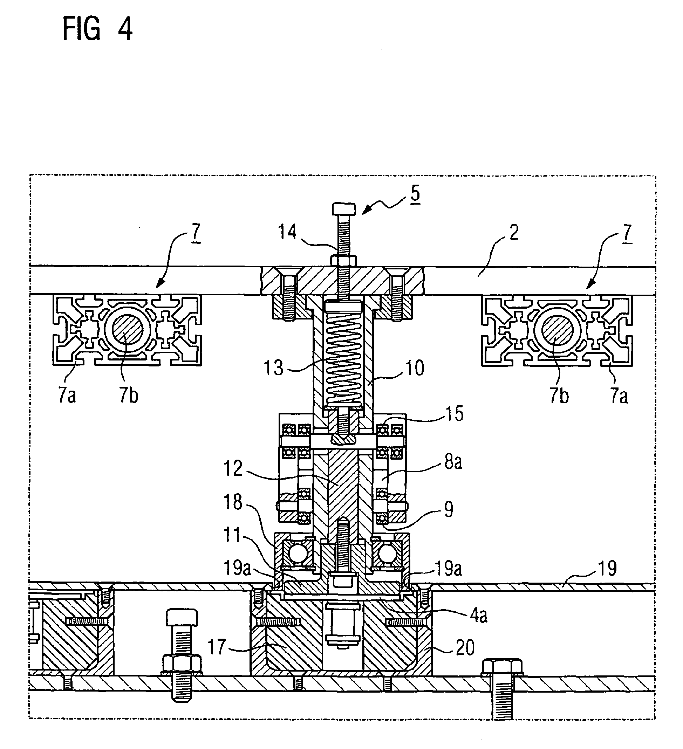

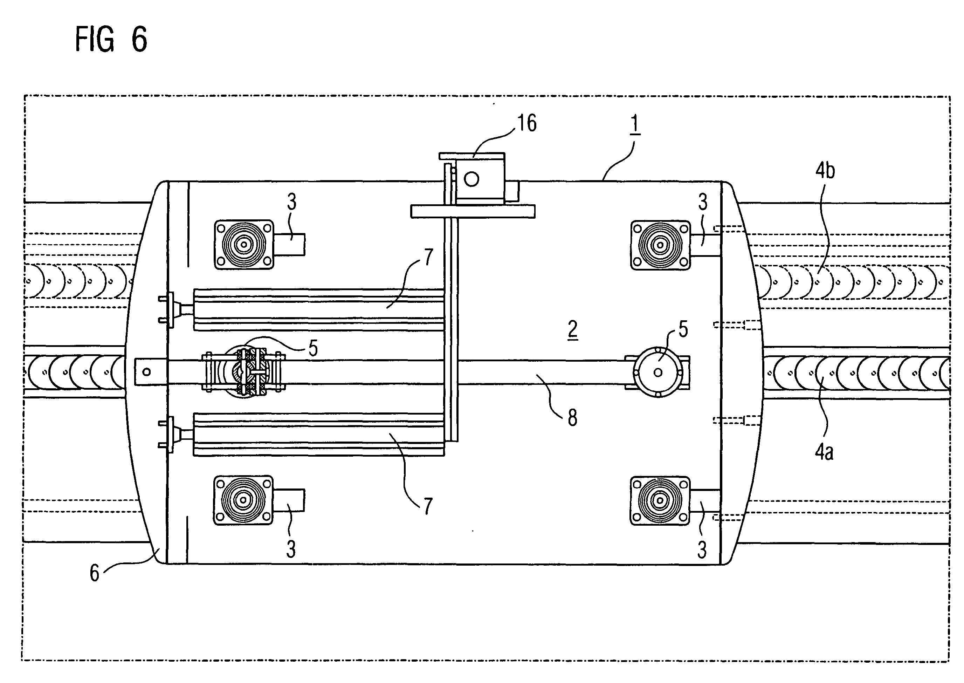

In Figur 6 ist die Draufsicht und in Figur 3 der Querschnitt eines Transportwagens 1 dargestellt, der ein mit vier Lenkrollen 3 ausgestattetes Fahrgestell 2 aufweist. Die Lenkrollen 3 sind jeweils um vertikale Achsen frei schwenkbar und stützen das Fahrgestell 2 auf der durch den Stauförderer 4 gebildeten Fahrbahn 19 ab. Der Antrieb erfolgt über zwei Mitnehmer 5, von denen einer zwischen den beiden vorderen Lenkrollen 3 und einer zwischen den beiden hinteren Lenkrollen 3 angeordnet ist. Die Funktionsweise des Mitnehmers 5 ist am besten aus der Figur 4 erkennbar. Dort ist ersichtlich, das der Mitnehmer 5 jeweils eine Führungshülse 10 aufweist, die mittels eines Flansches an die Unterseite des Fahrwerks 2 angeschraubt ist. Aus der Führungshülse 10 ragt nach unten eine Mitnehmerstange 12 heraus, an deren unterem Ende ein Mitnehmerteller 11 befestigt ist. Die Mitnehmerstange 12 ist in der Führungshülse 10 linear geführt und unter Bildung einer Vorspannkraft über eine Andrückfeder 13 gegenüber dem Fahrgestell 2 abgestützt. Mit 14 ist eine schraubbare, durch eine Kontermutter sicherbare Federkrafteinstellung gekennzeichnet. Beim Aufsetzen des Transportwagens 1 auf die Fahrbahn 19 setzt der durch die Andrückfeder 13 nach unten ausgelenkte Mitnehmerteller 11 auf den Fördertrum 4a des Plattenbandes auf. Die Andrückkraft und somit die wirksame Kraft für den Reibschluss zwischen Mitnehmer 5 und Fördertrum 4a wird durch die jeweilige Einstellung der Federvorspannung der Andrückfeder 13 unmittelbar beeinflusst. Je geringer die Einschraubtiefe der Federkrafteinstellung 14 gewählt ist, umso geringer ist die Reibschlusskraft. Man erkennt in den Figuren 3 und 4, dass der Fördertrum 4a gleitbar auf einer Gleitleiste 17 aufliegt, die beispielsweise aus einem Kunststoff mit geringem Reibkoeffizient und hoher Verschleißfestigkeit besteht und in ein U-förmiges Hohlprofil 20 eingelegt ist. Im Mittelbereich der Gleitleiste 17 ist ein Hohlraum vorgesehen, der die kettenartigen Verbindungselemente des Fördertrums 4a des Plattenbandes aufnimmt. Der in Figur 3 dargestellte Rücklauftrum 4b ist durch Flächenelemente, die beispielsweise aus Stahlblechen oder andersartigem ausreichend festem, plattenförmigem Material bestehen und die Fahrbahn 19 bilden, nach oben hin vollständig überdeckt. Demgegenüber ist der Fördertrum 4a in einem sehr flach ausgebildeten Führungskanal angeordnet, der nach oben vollständig offen ist. Die Seitenwände dieses Führungskanals sind die seitlichen Stirnflächen 19a der Flächenelemente der Fahrbahn 19, die an dieser Stelle eine entlang des Verlaufs des Fördertrums 4a sich erstreckende Aussparung aufweisen. In diesen Führungskanal hinein ragt von oben nicht nur der Mitnehmerteller 11 sondern auch ein Seitenführungselement, das im vorliegenden Fall als Seitenführungsrad 18 ausgebildet ist. Dieses dient zur Richtungsführung des Transportwagens 1 und stützt sich seitlich an den Stirnflächen 19a der Flächenelemente der Fahrbahn 19 ab. Die Ausbildung als Seitenführungsrad 18 gewährleistet besonders geringe Reibungskräfte und einen geringen Verschleiß. Stattdessen wäre es im Prinzip aber auch möglich, ein Seitenführungselement mit feststehender Führungsfläche am Mitnehmer 5 vorzusehen.

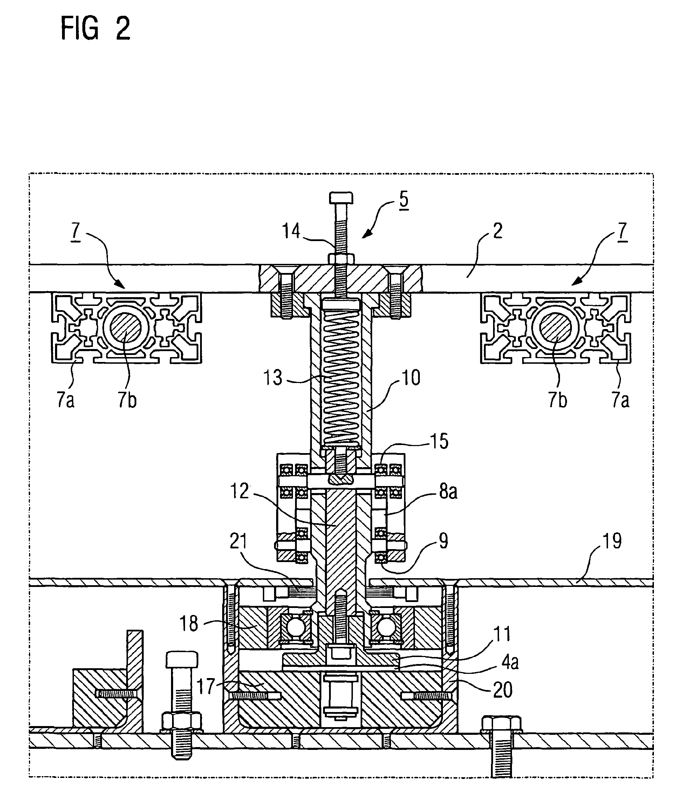

Der Vergleich der Figur 4 mit der Figur 2, die die Gestaltung des Mitnehmers 5 und des Führungskanals für das Seitenführungsrad 18 gemäß der bisher bekannten Lösung zeigt, macht deutlich, dass die Bauhöhe des erfindungsgemäßen Staufördersystems, also die Höhe der Fahrbahn 19 über dem Boden erheblich vermindert werden konnte. In Figur 2, in der funktionsgleiche Teile mit denselben Bezugszeichen wie in Figur 4 bezeichnet wurden, liegen die mit dem Seitenführungsrad 18 zusammenwirkenden Führungsflächen mit einem deutlichen Abstand unterhalb der Ebene der Fahrbahn 19, nämlich innerhalb des Hohlprofils 20. Die erfindungsgemäße Lösung verlagert diese seitlichen Führungsflächen im Prinzip in den unmittelbaren Nahbereich der Fahrbahnebene. In Figur 2 sind auch die nach dem Stand der Technik erforderlichen Bürstenleisten 21 erkennbar, die zur Abdeckung des Führungskanals nach oben zur Verhinderung des Eindringens von Fremdkörpern notwendig waren.

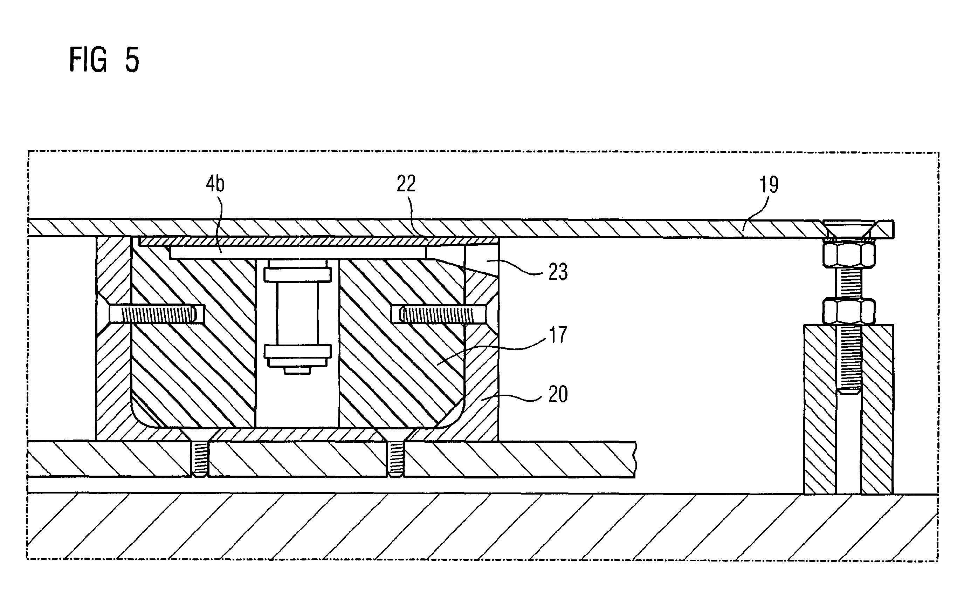

Wenn ein Fremdkörper auf den Fördertrum 4a des Plattenbandes fallen sollte, bleibt er auf dem Plattenband innerhalb des Führungskanals für den Mitnehmer gut sichtbar liegen und kann problemlos vom Personal entfernt werden. Für den Fall, dass ein solcher Fremdkörper nicht rechtzeitig erkannt werden sollte, ist in Weiterbildung der Erfindung an mindestens einer Stelle des Plattenbandes ein Abstreifer 22 vorgesehen, der, wie in Figur 5 dargestellt ist, als einfaches quer zur Förderrichtung verlaufendes Abstreifblech ausgebildet ist. Im vorliegenden Fall ist dieser Abstreifer unmittelbar über dem Rücklauftrum 4b unterhalb der Fahrbahn 19 angeordnet und leitet etwaige Fremdkörper durch eine Entsorgungsöffnung 23, die in der Gleitleiste und in der Seitenwand des Hohlprofils 20 angeordnet ist, in einen Hohlraum unterhalb der Fahrbahn 19. Dieser Hohlraum sollte möglichst von außen leicht zugänglich sein, so dass dort gesammelte Fremdkörper leicht wieder entfernt werden können. Hierzu eignet sich insbesondere die Anordnung einer Revisionsklappe (nicht dargestellt).

Um im Fall des gleichzeitigen Stauens mehrerer Transportwagen an einer Stelle die Staukraft nicht nur zu begrenzen, sondern vollständig aufzuheben, sieht eine vorteilhafte Ausführungsform des erfindungsgemäßen Staufördersystems hierfür eine besondere Vorrichtung vor, die aus den Figuren 4 und 6 erkennbar ist. Jeder Transportwagen 1 ist in seinem vorderen Bereich mit einer durch Linearführungen 7 längsverschieblich aufgehängten Stoßstange 6 versehen. Figur 4 zeigt, dass die Linearführungen 7 jeweils aus Führungsprofilen 7a und darin geführte Führungsstangen 7b bestehen. Mit der Stoßstange 6 ist ein Betätigungsgestänge 8, das im Bereich der Mitnehmer 5 mit einem Nockenstück 8a versehen ist, fest verbunden. Zweckmäßigerweise ist dieses Nockenstück 8a jeweils gabelförmig ausgebildet und beiderseits an den Mitnehmern 5 vorbeigeführt. Die Mitnehmer 5 sind jeweils mit mindestens einer Lagerrolle 9 und mindestens einer Mitnehmerrolle 15 versehen, die ihrerseits über eine entsprechende Achsenhalterung fest mit der Mitnehmerstange 12 des Mitnehmers 5 gekoppelt sind. Bei einem Aufprall der Stoßstange 6 auf ein Hindernis, also beispielsweise auf einen bereits stehenden Transportwagen oder auf eine auf der Fahrbahn 19 stehende Person verschiebt sich die Stoßstange 6 gegenüber dem Fahrgestell 2 und nimmt in gleicher Weise das Bestätigungsgestänge 8 mit. Hierdurch verschiebt sich jeweils das Nockenstück 8a, das so gestaltet ist, dass die Mitnehmerrolle 15 mit ihrer horizontalen Achse und damit auch die Mitnehmerstange 12 senkrecht nach oben gedrückt werden. Hierdurch wird automatisch der Mitnehmerteller 11 von dem Fördertrum 4a abgehoben und der bestehende Reibschluss aufgehoben. Dieselbe Wirkung ergibt sich, wenn der Transportwagen 1 an einem seitlich neben der Fahrbahn 19 angeordneten Anschlag (nicht dargestellt) aufläuft. Hierzu ist an einer Längsseite des Transportwagens 1 ein Wagenstopanschlag 16 vorgesehen, der über eine Gestängeverbindung fest mit den Führungsstangen 7b der Linearführungen 7 verbunden ist.

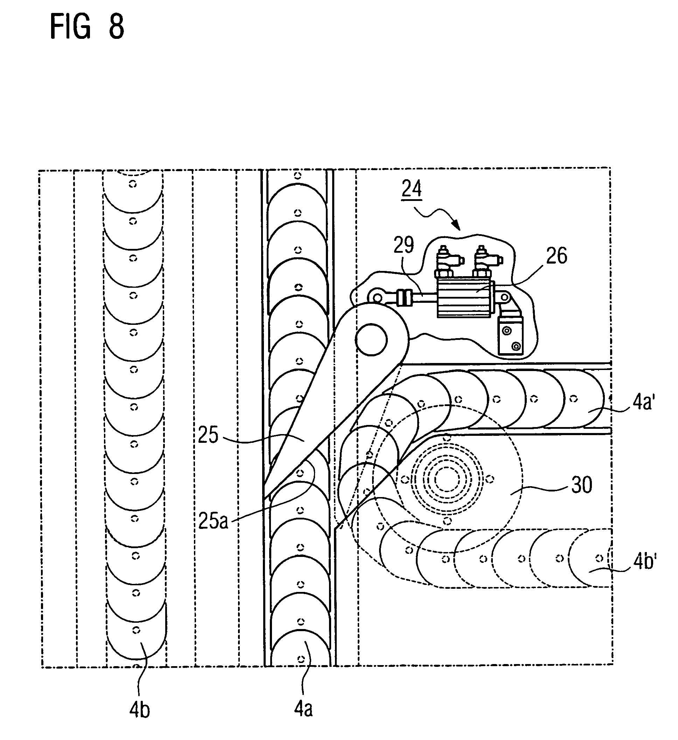

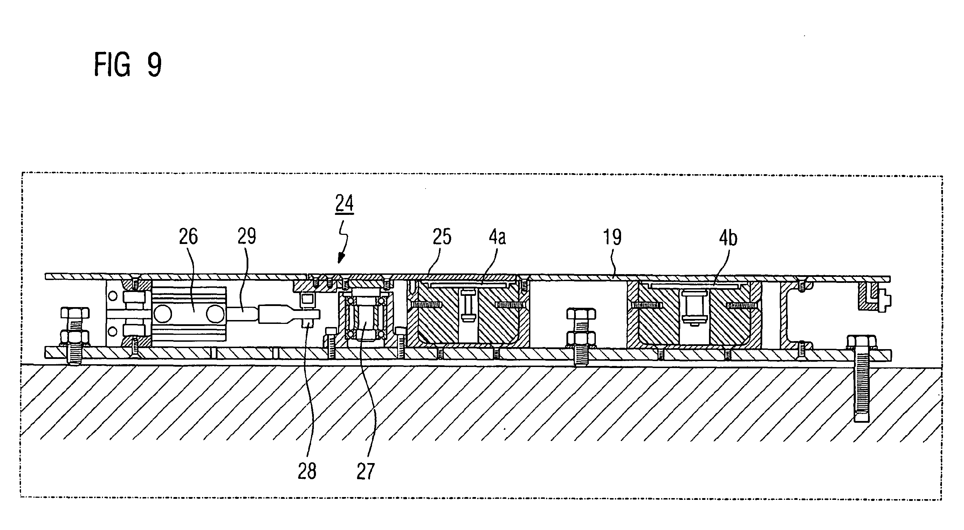

Um ein möglichst breites Anwendungsspektrum des erfindungsgemäßen Staufördersystems gewährleisten zu können, muss es möglich sein, unabhängig voneinander angetriebene Fördertrume 4a, 4a', 4a" über eine Weiche 24 miteinander zu verbinden. Eine bevorzugte Ausführungsform der Erfindung sieht hierzu im Übergangsbereich zwischen zwei Fördertrumen 4a, 4a' (Figur 8) eine Aussparung in den die Fahrbahn 19 bildenden Flächenelementen vor. In dieser Aussparung ist eine Weichenzunge 25 angeordnet, die um eine vertikale Schwenkachse 27 (Figur 9) schwenkbar ist. Die Weichenzunge 25 ist im wesentlichen als plattenförmiger Körper ausgebildet, deren Dicke derjenigen der Flächenelemente der Fahrbahn 19 entspricht. Die Dicke der Weichenzunge 25 sollte zur Gewährleistung einer möglichst ebenen Fahrbahn 19 nicht größer sein. Die Funktion der Weichenzunge 25 ist diejenige eines in den Förderbereich des Fördertrums 4a einschwenkbaren Abweisers, also eines Hindernisses für die Mitnehmer 5 der Transportwagen 1. Ein auf die eingeschwenkte Weichenzunge 25 auflaufender Mitnehmer 5 würde an der schräg zur Förderrichtung des Fördertrums 4a angestellten Flanke 25a der Weichenzunge 25 entlanggeführt und in Richtung auf den Wirkbereich des Fördertrums 4a' des benachbart angeschlossenen Stauförderers 4' abgelenkt, wie sich dies aus der Schaltstellung der Weiche 24 in der Figur 8 ergibt. Bei unbetätigter Weiche 24 nimmt die Weichenzunge 25 die gestrichelt in Figur 8 dargestellte Stellung ein, liegt also im Wesentlichen parallel zum Fördertrum 4a und vollständig außerhalb dessen Führungskanals. Zur Verschwenkung der Weichenzunge 25 ist eine maschinelle Weichenbetätigung 26 vorteilhafterweise vorgesehen, die im vorliegenden Fall als Pneumatikzylinder ausgebildet ist, der eine Betätigungstange 29 aufweist, welcher seinerseits über eine Anlenkung 28 mit der Weichenzunge 25 verbunden ist (Figur 9). Der Pneumatikzylinder ist um eine vertikale Achse verschenkbar gelagert. Stattdessen könnte selbstverständlich auch ein beliebiger anderer linearer Antrieb eingesetzt werden (z. B. elektromotorischer Spindeltrieb oder Zahnstangentrieb). Auch ein Drehantrieb über Zahnräder ist selbstverständlich möglich. Wenn ein Transportwagen 1 mit seinem vorderen Mitnehmer 5 über die eingeschwenkte Weichenzunge 25 vom Fördertrum 4a auf den Fördertrum 4a' übergeleitet wird, könnte er eine Stellung erreichen, in der die an dem Mitnehmerteller 11 verfügbar Reibkraft nicht mehr ausreicht, um eine ordnungsgemäße Vortriebsbewegung sicherzustellen. Durch das Vorhandensein des hinteren Mitnehmers 5 wird dieser Zustand jedoch sicher ausgeschlossen, so dass es auf keinen Fall zu einer Totstellung des Antriebssystems kommen kann. Dies gilt auch im Falle des Passierens der in Figur 1 dargestellten Übergangsstelle mit den beiden Kettenrädern 30 im Bereich der oberen Längsseite des rechteckförmigen Umlaufs des Fördertrums 4a. Wenn die Antriebsverbindung des Mitnehmers 5 im Zwischenraum der beiden Kettenräder 30 fehlt, wird durch den zweiten Mitnehmer 5 die Aufrechterhaltung des Antriebs problemlos gewährleistet. Da die Dicke der Weichenzunge 25 derjenigen der Flächenelemente der Fahrbahn 19 entspricht, wird im Bereich der Weiche 24 kein zusätzliches Hindernis für die Lenkrollen 3 des Transportwagens 1 geschaffen, das Schwierigkeiten bei der Überwindung bieten würde. Es müssen keine Erhebungen passiert werden, die über die Ebene der Fahrbahn 19 hinausgehen. Allenfalls ist es möglich, dass eine der Lenkrollen einen Bereich überfahren muss, in dem eine Aussparung in der Fahrbahn 19 vorliegt. Dies ist jedoch ohne jegliche Probleme möglich, da stets mindestens drei Lenkrollen eine feste Abstützung gewährleisten und zusätzlich durch die Mitnehmer ebenfalls eine Abstützung gegeben ist, die einen jederzeit sicheren Stand des Transportwagens 1 gewährleistet. Ein Kippen des Transportwagens 1 kann sicher ausgeschlossen werden.

## Patentansprüche

1. Staufördersystem mit mindestens einem kurvengängigen, niedrig bauenden Stauförderer (4), der ein endlos umlaufendes Plattenband (Fördertrum 4a, Rücklauftrum 4b) und mindestens einen Transportwagen (1) aufweist, wobei der Transportwagen (1) jeweils ein über eine Mehrzahl von Lenkrollen oder -Rädern (3) auf einer aus Flächenelementen gebildeten Fahrbahn (19) abgestütztes Fahrgestell (2) besitzt und mittels mindestens einem Mitnehmer (5) der am Transportwagen (1) befestigt ist, reibschlüssig mit dem Plattenband verbindbar ist, wobei ferner der mindestens eine Mitnehmer (5) ein Seitenführungselement aufweist, das zur Richtungsführung des Transportwagens (1) mit im Bereich des Fördertrums (4a) des Plattenbandes unterhalb der Ebene der Fahrbahn (19) angeordneten Führungsflächen zusammenwirkt, und wobei die Flächenelemente der Fahrbahn (19) den Bereich des Fördertrums (4a) aussparen,
**dadurch gekennzeichnet, dass**
das Plattenband im unmittelbaren Nahbereich der Unterseite der Flächenelemente der Fahrbahn (19) angeordnet ist und die Führungsflächen für die Richtungsführung des Transportwagens (1) durch die seitlichen Stirnflächen (19a) der Flächenelemente im für den Fördertrum (4a) ausgesparten Bereich gebildet sind.

2. Staufördersystem nach Anspruch 1,
**dadurch gekennzeichnet, dass**
der ausgesparte Bereich nach oben hin offen ist.

3. Staufördersystem nach einem der Ansprüche 1 - 2,
**dadurch gekennzeichnet, dass**
das Seitenführungselement als Seitenführungsrad (18) ausgebildet ist.

4. Staufördersystem nach einem der Ansprüche 1 - 3,
**dadurch gekennzeichnet, dass**
die Flächenelemente als dickwandige Bleche oder Platten ausgebildet sind.

5. Staufördersystem nach einem der Ansprüche 1 - 4,
**dadurch gekennzeichnet, dass**
im Bereich des Fördertrums (4a) und/oder des Rücklauftrums (4b) mindestens ein Abstreifer (22) zur automatischen Entfernung von Fremdkörpern auf dem Plattenband vorgesehen ist.

6. Staufördersystem nach Anspruch 5,
**dadurch gekennzeichnet, dass**
die Fremdkörper durch den Abstreifer (22) in einen Hohlraum unterhalb der Flächenelemente der Fahrbahn (19) gefördert werden.

7. Staufördersystem nach einem der Ansprüche 1 - 6,
**dadurch gekennzeichnet, dass**
der Transportwagen (1) jeweils über vier Lenkrollen oder -räder (3) verfügt.

8. Staufördersystem nach einem der Ansprüche 1 - 7,
**dadurch gekennzeichnet, dass**
zwei Mitnehmer (5) vorgesehen sind, von denen einer im vorderen und einer im hinteren Bereich des Fahrgestells (2) angeordnet ist.

9. Staufördersystem nach einem der Ansprüche 1 - 8,
**dadurch gekennzeichnet, dass**
das Transportwagen (1) jeweils mit einer Einrichtung zur Aufhebung des Reibschlusses zwischen dem mindestens einen Mitnehmer (5) und dem Plattenband versehen ist, wobei diese Einrichtung durch das Auffahren des Transportwagens (1) auf einen anderen, bereits stehenden Transportwagen (1) betätigbar ist.

10. Staufördersystem nach einem der Ansprüche 1 - 9,
**dadurch gekennzeichnet, dass**
eine Einrichtung zur Einstellung der Reibschlusskraft des mindestens einen Mitnehmers (5) vorgesehen ist.

11. Staufördersystem nach einem der Ansprüche 1 - 10,
**dadurch gekennzeichnet, dass**
mindestens zwei Stauförderer (4, 4', 4'') vorgesehen sind, deren Fördertrume (4a, 4a', 4a'') jeweils paarweise durch eine Weiche (24) fördertechnisch miteinander verbindbar sind.

12. Staufördersystem nach Anspruch 11,
**dadurch gekennzeichnet, dass**
die Flächenelemente der Fahrbahn (19) im Bereich der Weiche (24) jeweils eine Aussparung aufweisen, innerhalb deren eine insbesondere motorisch antreibbare Weichenzunge (25) mit einer vertikalen Schwenkachse (27) angeordnet ist, wobei die Weichenzunge (25) als im wesentlichen plattenförmiger Körper mit einer den Flächenelementen der Fahrbahn (19) entsprechenden Dicke ausgebildet und wahlweise in den Bereich des Fördertrums (4a) des einen Stauförderers (4) hineinschwenkbar ist.

13. Staufördersystem nach einem der Ansprüche 11 - 12,
**dadurch gekennzeichnet, dass**
die Weichenzunge (25) bis zum Anschlag an die ihr gegenüberliegende seitliche Stirnfläche (19a) der Flächenelemente der Fahrbahn (19) im Bereich des Fördertrums (4a) verschwenkbar ist.

## Claims

1. Accumulating conveying system with at least one curve-negotiating, low accumulating conveyor (4), which has an endlessly circulating apron (feed run 4a, return run 4b) and at least one transporting carriage (1), the transporting carriage (1) having in each case a chassis (2), which is supported by means of a plurality of steering rollers or wheels (3) on a track (19) formed by flat elements, and can be frictionally connected to the apron by means of at least one driver (5), which is fastened to the transporting carriage (1), the at least one driver (5) also having a lateral guiding element, which interacts with guiding surfaces arranged in the region of the feed run (4a) of the apron below the level of the track (19), for the directional guidance of the transporting carriage (1), and the flat elements of the track (19) leaving a clearance for the region of the feed run (4a), **characterized in that** the apron is arranged in the direct proximity of the underside of the flat elements of the track (19) and the guiding surfaces for the directional guidance of the transporting carriage (1) are formed by the lateral end faces (19a) of the flat elements in the region that is provided with a clearance for the feed run (4a).

2. Accumulating conveying system according to Claim 1, **characterized in that** the region provided with a clearance is upwardly open.

3. Accumulating conveying system according to either of Claims 1 and 2, **characterized in that** the lateral guiding element is formed as a lateral guiding wheel (18).

4. Accumulating conveying system according to one of Claims 1 to 3, **characterized in that** the flat elements are formed as thick-walled metal sheets or plates.

5. Accumulating conveying system according to one of Claims 1 to 4, **characterized in that** at least one stripper (22) for the automatic removal of foreign bodies on the apron is provided in the region of the feed run (4a) and/or the return run (4b).

6. Accumulating conveying system according to Claim 5, **characterized in that** the foreign bodies are transported by the stripper (22) into a hollow space under the flat element of the track (19).

7. Accumulating conveying system according to one of Claims 1 to 6, **characterized in that** the transporting carriage (1) has in each case four steering rollers or wheels (3).

8. Accumulating conveying system according to one of Claims 1 to 7, **characterized in that** two drivers (5) are provided, one of which is arranged in the front region of the chassis (2) and one of which is arranged in the rear region of the chassis (2).

9. Accumulating conveying system according to one of Claims 1 to 8, **characterized in that** the transporting carriage (1) is provided in each case with a device for eliminating the frictional engagement between the at least one driver (5) and the apron, this device being able to be actuated by the transporting carriage (1) running into another, already stationary transporting carriage (1).

10. Accumulating conveying system according to one of Claims 1 to 9, **characterized in that** a device for setting the frictional engaging force of the at least one driver (5) is provided.

11. Accumulating conveying system according to one of Claims 1 to 10, **characterized in that** at least two accumulating conveyors (4, 4', 4") are provided, the feed runs (4a, 4a', 4a") of which can in each case be connected for conveying purposes to one another in pairs by means of a switch (24).

12. Accumulating conveying system according to Claim 11, **characterized in that**, in the region of the switch (24), the flat elements of the track (19) have in each case a clearance, within which a switch blade (25), in particular a motor-driveable switch blade, with a vertical pivoting axis (27) is arranged, the switch blade (25) being formed as a substantially plate-shaped body with a thickness corresponding to the flat elements (19) of the track, and can optionally be pivoted into the region of the feed run (4a) of the one accumulating conveyor (4).

13. Accumulating conveying system according to either of Claims 11 and 12, **characterized in that** the switch blade (25) can be pivoted until it comes up against the lateral end face (19a) of the flat elements of the track (19) that lies opposite it in the region of the feed run (4a).

## Revendications

1. Système de transport d'accumulation, comprenant au moins un transporteur (4) d'accumulation de construction basse et de bonne tenue en courbe, qui comporte une bande transporteuse à tabliers circulant sans fin (brin 4a de transport, brin 4b de retour) et au moins un chariot (1), le chariot (1) ayant respectivement un châssis (2) soutenu au moyen d'une pluralité de galets ou roues (3) de guidage sur une voie (19) constituée d'éléments plans et peut, au moyen d'au moins un entraîneur (5) qui est fixé sur le chariot (1), être relié par friction à la bande transporteuse à tabliers, l'entraîneur (5) comportant en outre un élément de guidage latéral qui, pour le guidage directionnel du chariot (1), coopère avec des surfaces de guidage disposées en dessous du plan de la voie (19) dans la région du brin (4a) de transport de la bande transporteuse à tabliers, et les éléments plans de la voie (19) étant évidés dans la région du brin (4a) de transport,
**caractérisé en ce que** la bande transporteuse à tabliers est disposée au voisinage immédiat de la face inférieure des éléments plans de la voie (19), et les surfaces de guidage pour le guidage directionnel du chariot (1) sont formées par les surfaces (19a) frontales latérales des éléments plans dans la région évidée pour le brin (4a) de transport.

2. Système de transport d'accumulation suivant la revendication 1, **caractérisé en ce que** la région évidée est ouverte vers le haut.

3. Système de transport d'accumulation suivant l'une des revendications 1 et 2, **caractérisé en ce que** l'élément de guidage latéral est réalisé sous forme de roue (18) de guidage latéral.

4. Système de transport d'accumulation suivant l'une des revendications 1 à 3, **caractérisé en ce que** les éléments plans sont réalisés sous forme de plaques ou de tôles à paroi épaisse.

5. Système de transport d'accumulation suivant l'une des revendications 1 à 4, **caractérisé en ce qu'**au moins un racleur (22) est prévu dans la région du brin (4a) de transport et/ou du brin (4b) de retour pour enlever automatiquement les corps étrangers sur la bande transporteuse à tabliers.

6. Système de transport d'accumulation suivant la revendication 5, **caractérisé en ce que** les corps étrangers sont refoulés par le racleur (22) dans une cavité située en dessous des éléments plans de la voie (19).

7. Système de transport d'accumulation suivant l'une des revendications 1 à 6, **caractérisé en ce que** le chariot (1) dispose respectivement de quatre galets ou roues (3) de guidage.

8. Système de transport d'accumulation suivant l'une des revendications 1 à 7, **caractérisé en ce qu'**il est prévu deux entraîneurs (5), dont l'un est disposé dans la région avant et l'autre dans la région arrière du châssis (2).

9. Système de transport d'accumulation suivant l'une des revendications 1 à 8, **caractérisé en ce que** le chariot (1) est respectivement pourvu d'un dispositif pour supprimer la liaison par friction entre l'entraîneur (5) et la bande transporteuse à tabliers, ce dispositif pouvant être actionné par le fait que le chariot (1) heurte un autre chariot (1) déjà immobilisé

10. Système de transport d'accumulation suivant l'une des revendications 1 à 9, **caractérisé en ce qu'**il est prévu un dispositif pour régler la force d'engagement par friction de l'entraîneur (5) au moins unique.

11. Système de transport d'accumulation suivant l'une des revendications 1 à 10, **caractérisé en ce qu'**il est prévu au moins deux transporteurs (4, 4', 4") d'accumulation, dont les brins (4a, 4a', 4a'') de transport peuvent être respectivement reliés par paires en matière de convoyage par une aiguille (24).

12. Système de transport d'accumulation suivant la revendication 11, **caractérisé en ce que** les éléments plans de la voie (19) présentent respectivement dans la région de l'aiguille (24) un évidement à l'intérieur duquel est disposée une lame (25) d'aiguille pouvant notamment être entraînée par moteur et dotée d'un axe (27) de pivotement vertical, la lame (25) d'aiguille étant réalisée sous forme de corps sensiblement en forme de plaque d'une épaisseur correspondant aux éléments plans de la voie (19) et pouvant être sélectivement rentrée par pivotement dans la région du brin (4a) de transport de l'un (4) des transporteurs d'accumulation.

13. Système de transport d'accumulation suivant l'une des revendications 11 et 12, **caractérisé en ce que** la lame (25) d'aiguille peut, dans la région du brin (4a) de transport, être pivotée jusqu'en butée contre la surface (19a) frontale latérale des éléments plans de la voie (19) qui lui fait face.
